# EUROPEAN PATENT APPLICATION

(11) **EP 0 569 205 A1**
(43) Date of publication of application: **10.11.1993**
(21) Application number: 93303431.6
(22) Date of filing: 30.04.1993
(51) Int. Cl.: B64G 1/24, B64G 1/36

(54) **Spacecraft control apparatus**

(30) Priority: 02.05.1992 GB 9209569
(71) Applicant: MMS SPACE SYSTEMS LIMITED, Stanmore, Middlesex HA7 4LY (GB)
(72) Inventor: Alldridge, William John, Filton, Bristol BS12 7QW (GB)
(74) Representative: Waters, Jeffrey

(57) **Abstract**

A control apparatus for a spacecraft including:-
sun or star acquisition sensor means,
a plurality of mechanical gyroscopes (16) each having a gyroscopic rotor and each responsive to rotation of the spacecraft about a respective body axis;
a reaction control system (18) for applying control movements to said spacecraft;
an attitude and orbit control means (12) responsive to the outputs of said mechanical gyroscopes and to an input demand signal, to control said reaction control system thereby to control the attitude and orbit of said spacecraft, and
a safe mode control system (24) for placing the spacecraft in a safe mode in the event of loss or impairment of the attitude and orbit control function,
characterised in that
said safe mode control system (24) includes:-
a plurality of solid-state rotation sensor means (28) each responsive to rotation of the spacecraft about a respective body axis, and
a safe mode control means (26) responsive to the outputs of said solid-state rotation sensor means (28) and the output of said sun or star acquisition means to control the reaction control system (18) to place the spacecraft in a predetermined attitude.

## Description

This invention relates to a spacecraft control apparatus for placing the spacecraft in a safe mode in the event that the attitude and orbit control function is lost or impaired.

Most spacecraft have an attitude and orbital control system (AOCS) which controls the attitude of the spacecraft and its orbital parameters. The AOCS usually includes mechanical spinning rotor gyroscopes for sensing the attitude of the spacecraft body axes with respect to a datum. Control thrusts or movements are applied to the spacecraft by a reaction control system which includes reaction control thrusters and may include other actuators such as reaction wheels.

The AOCS of most spacecraft has at least the mechanical gyroscopes duplicated, either as a separate second unit or as a second channel housed within the same unit. In the event of an identifiable failure occurring in one of these units, it is usual to switch to the complete suite of redundant or back-up units, or to an individual back-up gyroscope where the failure has been deemed to have occurred.

Almost every spacecraft, both commercial and scientific, embodies a safe mode into which the spacecraft can be placed in the event of a loss of or impairment of the AOCS function which cannot be resolved by switching to redundant units. Typically, this safe mode points a selected axis of the spacecraft towards the sun and controls the body rates about the other two orthogonal axes to be zero. Following this, mission controllers at the Ground Control Station can diagnose failure causes and remedies in a more protracted timescale. Most of these safe-mode schemes rely on some of the units of the normal AOCS.

This reliance is a severe disadvantage because the failure which results in loss of AOCS function may affect the redundant units as well or may affect the databus lines and databus interconnections between the various components of the AOCS which are also required for the safe mode. Another problem is that mechanical gyroscopes take a long time to spin-up and become operational and this length of time could be critical if major disturbance to the position of the spacecraft is to be avoided. Also, a significant power input is required to spin-up the gyroscope at a time when the power supply from the solar cells may be severely diminished.

Therefore a need exists for a spacecraft safe mode control which has minimal stabilisation time and low power requirements and which is, at least in part, independent of the AOCS system.

Solid state rotation sensors have drift and error figures significantly poorer than the mechanical gyroscopes employed in AOCS and so would not normally be contemplated for use on board a spacecraft. However, we have found that, despite their relatively poor performance, their stabilisation times, weight, power requirements make them particularly suitable for use in a safe-mode control system where they may provide angular rate data only. Thus, the solid state sensors envisaged have short stabilisation times and therefore a fast response when the spacecraft is placed in safe mode. Their solid-state nature inherently implies high reliability and they have excellent performance even after long periods of dormancy. Their much lower weight allows the possibility of a stand-alone unit which is almost entirely independent of the AOCS and so is far more resistant to factors affecting the AOCS.

Accordingly, in one aspect, this invention provides a control apparatus for a spacecraft including;-
sun or star acquisition sensor means;
a plurality of mechanical gyroscopes each having a gyroscope rotor and each responsive to rotation of the spacecraft about a respective body axis;
a reaction control system for applying control movements to said spacecraft;
an attitude and orbit control means responsive to the outputs of said mechanical gyroscopes and to an input demand signal, to control said reaction control system thereby to control the attitude and orbit of said spacecraft, and
a safe mode control system for placing the spacecraft in a safe mode in the event of loss or impairment of the attitude and orbit control function,
characterised in that
said safe mode control system includes:-
a plurality of solid-state rotation sensor means each responsive to rotation of the spacecraft about a respective body axis, and
a safe mode control means responsive to the outputs of said solid state rotation sensor means and the output of said sun or star acquisition means to control the reaction control system to place the spacecraft in a predetermined attitude.

As in conventional systems, the predetermined attitude may be with one spacecraft body axis pointing to the sun and with zero rotation about the other two orthogonal axes or it may be any other orientation.

The solid state sensor may be a fibre optic gyroscope or a vibrating structure gyroscope details of which are available in the technical literature. The solid state sensors ideally provide angular rate data only.

Although the reaction control system is used by both the attitude and orbit control means and the safe mode control means, the signal paths to the reaction control system from the two aforementioned control means are preferably independent.

Advantageously, the safe mode control system is a separate or stand-alone unit comprising said plurality of solid-state rotation sensor means and said safe mode control means and, optionally, one or more of said sun or star acquisition sensor means, ideally located within a common housing.

Preferably said safe mode control means comprises a plurality of analog components with hardwiring for reliable operation.

Preferably the reaction control system comprises a plurality of control thrusters.

Whilst the invention has been described above, it includes any inventive combination of the features set out above or in the following description.

The invention may be performed in various ways and an embodiment thereof will now be described in detail, by way of example only, reference being made to the accompanying drawings, in which:-
Figure 1 is a diagram of a AOCS/Safe mode control system for a spacecraft including an attitude and orbit control subsystem and a dedicated safe-mode controller, in accordance with the invention;
Figure 2 is a perspective view of the hardware layout of a safe mode unit for use in the system of Figure 1;
Figure 3 is a schematic representation of the safe mode unit of Figure 2, and
Figure 4 is a perspective view of a sun acquisition sensor for use in the unit system of Figures 1 to 3.

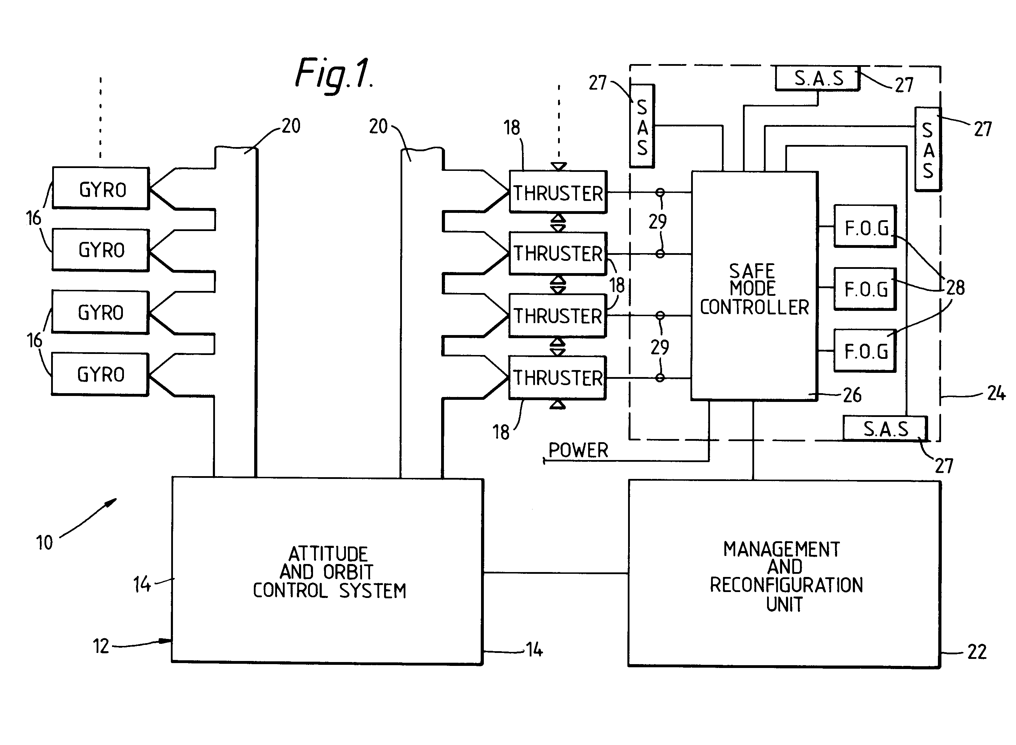

Referring initially to Figure 1, the spacecraft AOCS/Safe mode control system 10 includes an attitude and orbit control system 12 of generally conventional form including an AOCS control 14, a series of mechanical integrating rate gyros 16 with suitable redundancy. The AOCS control 14 exerts control over the spacecraft by controlling a series of control thrusters 18. The AOCS control 14 and the various components with which it communicates are interconnected by databus lines 20.

The performance of the AOCS 12 is monitored by Management and Reconfiguration Unit 22 and if the AOCS 12 fails or its performance is impaired, or the mission design so requires, the Management and Reconfiguration Unit 22 switches on a safe mode unit 24. The safe mode unit 24 comprises a safe mode controller 26 connected to a series of three orthogonally disposed solid state rotation sensors 28, here in the form of fibre optic gyroscopes (F.O.G.) 28 which provide a rate output. The safe mode controller 26 also receives signals from the sun acquisition sensors 27 and controls the control thrusters 18 along dedicated lines 29 independent of the databus lines 20.

When activated, the safe mode unit 24 uses the information derived from the sun acquisition sensors 16 and the fibre oiptic gyroscopes 28 to fire the control thrusters 18 to orient the spacecraft with one body axis pointing to the sun and with zero body rotation about the other two axes.

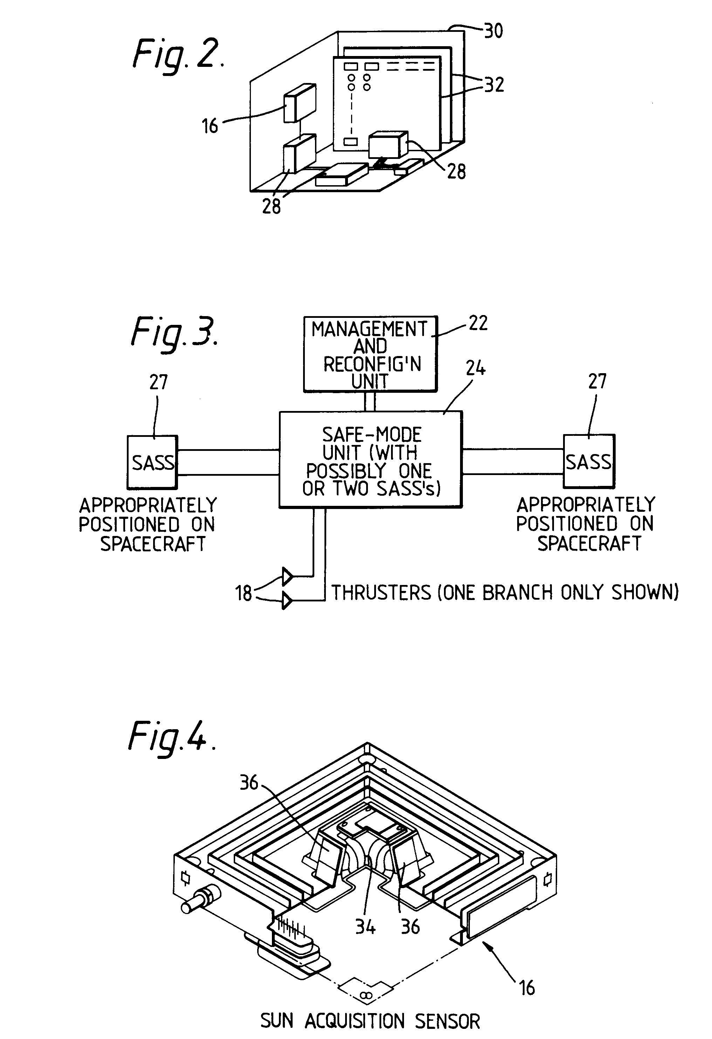

Referring to Figure 2, the safe mode unit is located in a stand-alone housing 30 which provides mountings for the three fibre optic gyroscopes 28. The unit also provides a mounting for one or possibly two of the sun acquisition sensors 16. Within the housing are also provided hardwired analog electronic printed circuit boards 32 making up the safe mode controller 26. The printed circuit boards 32 use analog components with hardwiring for reliable operation, and embody control laws which are simple proportional or combinations of proportional plus phase-lag terms. These control laws receive as their inputs angular position data from the sun acquisition sensors 16 and angular rate data from the fibre optic gyroscopes. The output is in the form of demand signals to the control thrusters 18 which provide the means of actuation in this mode.

Referring to Figure 4, each sun acquisition sensor 16 comprises a trapezoidal mounting base 34 on the four sloping sides of which are mounted strips 36 of solar cells. Being solar cell driven, they require no power supply and, in this example, are connected directly to dedicated analog electronic control circuits without any connection to any other databuses. There are usually three or four such sensors 16 fitted because they also provide the attitude sensing function during an initial acquisition mode where spacecraft acquisition of the sun is required from any arbitrary position, in addition to the safe mode task.

The dedicated analog electronics used for the safe mode may also be used for the initial acquisition mode following separation of the spacecraft from the launch vehicle.

The control thrusters 18 are part of the spacecraft propulsion subsystem but provide a means of actuation during a number of modes including safe mode and initial acquisition. The interconnections between the analog electronics and the control thrusters are dedicated lines independent of the normal databus lines.

In this illustrated embodiment, the solid state gyroscopes are quite independent of the mechanical gyroscopes used for attitude and orbit control and are dedicated to the safe mode and the initial acquisition mode.

Although the sun acquisition sensors may be distributed around the spacecraft to provide an all-round field of view, they will be an integral part of the stand-alone safe mode system. The only external connections are power supplies and the switching signals from the Management and Reconfiguration Unit.

## Claims

1. A control apparatus for a spacecraft including:-
sun or star acquisition sensor means,
a plurality of mechanical gyroscopes each having a gyroscope rotor and each responsive to rotation of the spacecraft about a respective body axis;
a reaction control system for applying control movements to said spacecraft;
an attitude and orbit control means responsive to the outputs of said mechanical gyroscopes and to an input demand signal, to control said reaction control system thereby to control the attitude and orbit of said spacecraft, and
a safe mode control system for placing the spacecraft in a safe mode in the event of loss or impairment of the attitude and orbit control function,
characterised in that
said safe mode control system includes:-
a plurality of solid-state rotation sensor means each responsive to rotation of the spacecraft about a respective body axis, and
a safe mode control means responsive to the outputs of said solid-state rotation sensor means and the output of said sun or star acquisition means to control the reaction control system to place the spacecraft in a predetermined attitude.

2. A control apparatus according to Claim 1, wherein each solid-state rotation sensor means comprises a fibre optic gyroscope.

3. A control apparatus according to Claim 1, wherein each solid state rotation sensor means comprises a vibrating structure gyroscope.

4. A control apparatus according to any preceding claim, wherein each solid-state rotation sensor means provides an output indicative of the rate of rotation sensed by the sensor.

5. A control apparatus according to any preceding claim, wherein the safe mode control means supplies control signals to said reaction control system along signal paths which are independent from the signal paths or databus lines along which said attitude and orbit control means supplies control signals to said reaction control system.

6. A control apparatus according to any preceding claim, wherein said safe mode control means is a separate unit with external connections to a power supply, to the spacecraft management and reconfiguration unit, and to said sun or star acquisition sensor means.

7. A control apparatus according to any preceding claim, wherein said reaction control system comprises a plurality of control thrusters.
